Europäisches Patentamt

European Patent Office

Office européen des brevets

(19)

(11) Veröffentlichungsnummer: **0 195 222**
B1

(12) **EUROPÄISCHE PATENTSCHRIFT**

(45) Veröffentlichungstag der Patentschrift:
24.08.88

(21) Anmeldenummer: **86101556.8**

(22) Anmeldetag: **06.02.86**

(51) Int. Cl.⁴: **B 60 R 13/06,** E 06 B 3/56,
B 29 C 47/02

(54) Elastomer-Profilleiste zum dichtenden Einfassen von Fensterscheiben und Verfahren zur Herstellung derselben.

(30) Priorität: **13.02.85 DE 3504907**

(43) Veröffentlichungstag der Anmeldung:
**24.09.86 Patentblatt 86/39**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**DE - A - 1 944 084
DE - A - 2 127 173
DE - A - 3 147 801
DE - B - 1 017 925
FR - A - 2 132 824
FR - A - 2 308 774
FR - A - 2 449 560**

(73) Patentinhaber: **Continental Aktiengesellschaft,
Königsworther Platz 1, D-3000 Hannover 1 (DE)**

(72) Erfinder: **Hermann, Dietmar, Kantstrasse 7,
D-3008 Garbsen 6 (DE)**
Erfinder: **Brodmann, Richard, Sadebuschstrasse 15,
D-3000 Hannover 21 (DE)**

**Beschreibung**

Die Erfindung bezieht sich auf zum dichtenden Einfassen von Fensterscheiben für Kraftfahrzeuge oder Gebäude dienende, aus einem vulkanisierten bzw. vernetzten Elastomer bestehende Profilleisten mit einer eine stoffschlüssige Verbindung mit den Scheibenrändern herstellenden Haftmittelauflage sowie auf Verfahren zum Herstellen und zum Anbringen solcher Profilleisten.

Feststehende Fensterscheiben in Fahrzeugen und Gebäuden werden mit Hilfe elastomerer Einfass-Profile dichtend und stossgesichert in der Rahmenkonstruktion des Fensterflügels, Türblattes od. dgl. bzw. in der flanschartigen Randumbörderlung der Fensteröffnung in der Fahrzeugkarosserie gehalten. Um die zum Aufbringen der notwendigen Pressung in tief eingezogenen Glasaufnahmenuten sonst übliche voluminöse Querschnittsform der Leisten mit über die Glasfläche besonders nach aussen stark hervortretenden Wulsten zu vermeiden, hat es sich in der Praxis eingebürgert, die elastomeren Profilleisten mit einer Klebeverbindung an den Scheibenrändern anzubringen und die auf diese Weise vorab eingefassten Fensterscheiben in vereinfachtem Verfahren einzubauen. Für eine derartige Klebeverbindung haben sich insbesondere Profilleisten gemäss DE-A-3 147 801 bewährt. Nach einem anderen bekannten Vorschlag (DE-A-3 314 152) wird die Profilleiste in unvulkanisiertem Zustand auf die Scheibenränder aufgebracht und danach unter gleichzeitiger Herstellung einer Haftverbindung mit dem Glas vulkanisiert.

Die Erfindung nimmt von solchen auf das vorbereitende Einfassen einbaufertiger Fensterscheiben abzielenden Verfahren ihren Ausgang, und es liegt ihr die Aufgabe zugrunde, mit einer neuartigen Ausbildung der Elastomer-Profilleisten einmal einen unter allen Umständen und selbst extremen klimatischen Einflüssen wirksamen Kantenschutz der Scheiben während der Lagerung und des Transportes zu erreichen und zum andern im Einbauzustand die absolut dichte und gegen starke Erschütterungen oder Schwingungen sichere Halterung zu gewährleisten. Als übergreifender Umstand tritt hierzu noch die Forderung nach maschinellem und automatisch gesteuertem Arbeitsablauf sowohl für das Einfassen der Scheiben als auch für das Einbauen der fertigen Glasleisteneinheiten ohne die Notwendigkeit manueller Tätigkeiten.

Nach der Erfindung zeichnen sich Profilleisten der eingangs geschilderten Gattung dadurch aus, dass sie aus einem vulkanisierten bzw. vernetzten Elastomer bestehen und mit einer Haftmittelauflage aus einem vulkanisierbaren Elastomer, beispielsweise einer Naturkautschuk enthaltenden Elastomermischung, der wahlweise auch ein unter der Einwirkung der Vulkanisationswärme Gas abspaltendes Treibmittel zugesetzt sein kann, versehen ist. Zweckmässig trägt die Haftmittelauflage dabei eine abziehbare Schutzabdeckung z.B. aus einer Folie eines thermoplastischen Kunststoffes.

Die Erfindung schafft eine Zweistoffverbund-Profilleiste in einer neuartiges Gestaltung, die im praktischen Gebrauch hervorstechende Vorteile begründet. An erster Stelle steht die damit mögliche hermetische Versiegelung der Scheibenränder, die ihre besondere Bedeutung für die Verwendung derart eingefasster Verbund-Glasscheiben in tropischen Gebieten hat. Daneben hat aber auch die mit dem Vulkanisieren des Haftmittels nach beiden Richtungen erzielbare festhaftende und ausserordentlich beständige stoffschlüssige Bindung hohe Haltekräfte zur Folge, die eine erwünschte materialsparende Bemessung des Leistenquerschnittes ohne Beeinträchtigung der Halterungsfestigkeit und der Sicherheit gegen Stoss- und Schwingungsbelastungen ermöglicht.

Die vorteilhaft durch Auspressen aus einer Strangpresse hergestellten und vulkanisierten bzw. vernetzten und anschliessend oder nach Zwischenlagerung unter Verwendung einer weiteren Strangpresse mit einer Haftmittelauflage von im Vergleich zu dem Leistenquerschnitt um Grössenordnungen geringerer Schichtstärke versehenen neuartigen Profilleisten können ohne nachteilige Auswirkungen zu Rollen gewickelt beliebig gelagert und nach Bedarf ihrer Verwendung zugeführt werden. Zum Einfassen einer Fensterscheibe werden sie — gegebenenfalls nach Abziehen einer Schutzfolie von der Haftmittelauflage — in Gebrauchslage auf die Scheibenränder aufgebracht, worauf das Haftmittel unter Herstellung einer stoffschlüssigen Verbindung sowohl mit der Profilleiste als auch mit der Scheibe vulkanisiert wird. Ein besonderer Vorteil des neuartigen Haftsystems ist, dass das Haftmittel während der Wärmebehandlung nicht verfliesst und daher auch keinen später zu entfernenden Überlauf bilden kann. Ist die Scheibe eine durch Schmelzen einer Zwischenfolie hergestellte Verbundglasscheibe, wird das Vulkanisieren zweckmässig mit dem Schmelzvorgang verbunden und die Haftmittelauflage gleichzeitig mit dem Herstellen des Verbundglases in einer einzigen Druck- und Wärmebehandlung vulkanisiert.

Für das problemose Aufbringen der Haftmittelauflage auf die Leisten macht sich die Erfindung die ausgeprägte Eigenklebrigkeit der üblicherweise verwendeten Elastomermischungen zunutze. Die Klebefreudigkeit der noch plastischen unvulkanisierten Auflagen schliesst die Gefahr von Lageänderungen während des Transportes oder des Gebrauchs der vorbereiteten Profilstreifen aus und bildet darüber hinaus eine wichtige Voraussetzung für die Anwendbarkeit automatisch gesteuerter Arbeitsverfahren zum Aufbringen der Leisten auf die häufig auch räumlich gekrümmt verlaufenden Randkanten der einzufassenden Scheiben. Die an sich schon vorhandene schwingungsdämpfende Wirkung der neuartigen Zweistoff-Profilleisten als Bindeglied zwischen der eingefassten Fensterscheibe und der starren Rahmenkonstruktion kann durch Zugabe von Blähmitteln zu der Elastomermischung der Haftmittelauflage noch verstärkt werden.

Es liegt im Rahmen der Erfindung, die Profilleisten allein zum Einfassen und Versiegeln der Scheibenrandkanten und als Klemmelemente innerhalb der Fensteröffnung zu verwenden oder aber sie zum überbrücken und dichten Verschliessen von Spalten schwankender Breite mit verformbaren Hohlkammer-Ansätzen zu gestalten.

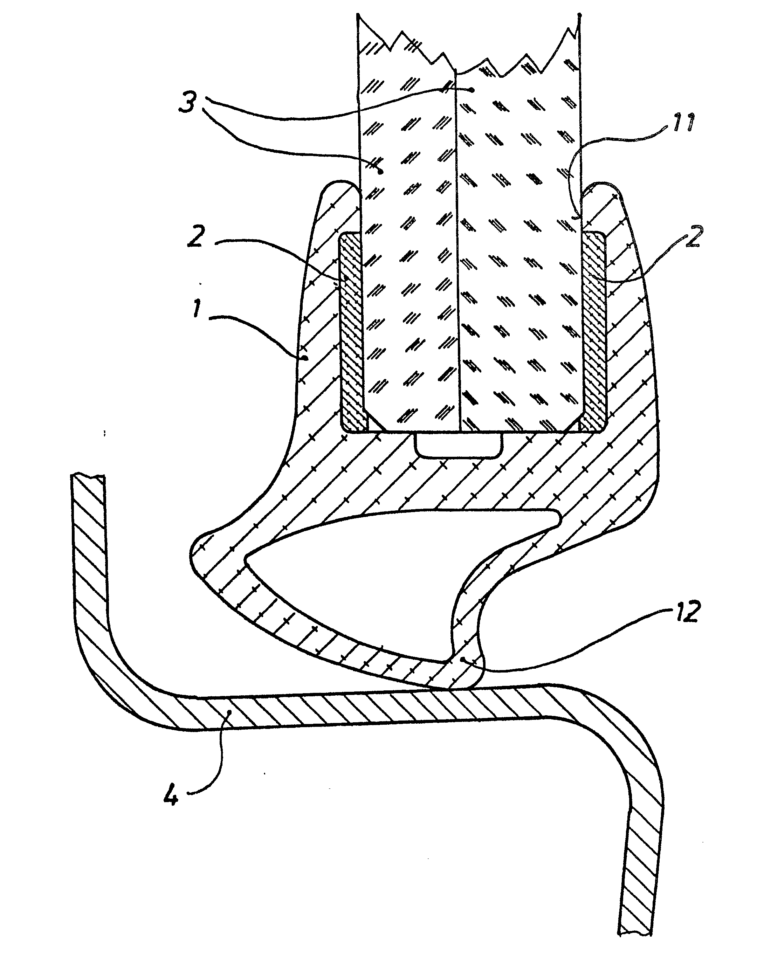

Die Erfindung ist anhand der schematischen Darstellung eines Ausführungsbeispiels in der Zeichnung verdeutlicht. Die einzige Figur der Zeichnung zeigt einen Querschnitt durch eine neuartige Profilleiste in Verbindung mit einer Verbundglasscheibe in Einbaulage in der Fensteröffnung einer Fahrzeugkarosserie.

Die gezeichnete Profilleiste 1 ist beispielsweise aus einem EPDM-Kautschuk nach dem Strangpressverfahren hergestellt und vulkanisiert und anschliessend mit an den Innenflächen einer Glasaufnahmenut 11 aufgebrachten Haftmittelauflagen 2 aus einer vulkanisierbaren, das heisst im noch vorwiegend plastischen Rohzustand befindlichen Naturkautschukmischung versehen. Sie umgibt in geschlossener Ringform eine in die Aufnahmenut 11 eingesetzte Fensterscheibe 3 und dichtet diese mittels eines angeformten Hohlkammerelementes 12 gegen die Fensteröffnung des flanschartig gekröpften Karosseriebleches 4 ab.

Die Fensterscheibe 3 ist in an sich bekannter Weise als Verbundscheibe aus zwei miteinander verklebten Einzelscheiben zusammengesetzt. Die Erfindung ermöglicht es, das Herstellen des Glasverbundes mit dem Einfassen der Scheibe zu kombinieren und in einer einzigen Wärme- und Druckbehandlung durchzuführen. Die Zweistoff-Profilleiste 1, 2 wird hierzu auf die Randkanten der erst noch lose unter Zufügung einer Schmelzklebefolie zusammengesetzten Einzelscheiben aufgebracht. Während der anschliessenden Vulkanisierung der Haftmittelauflagen 2 wird auch die Klebefolie zum Schmelzen gebracht und aktiviert. Im Ergebnis zeigt sich dann eine einbaufertig eingefasste Verbundglasscheibe mit den aus der Erfindung begründeten Merkmalen.

### Patentansprüche

1. Zum dichtenden Einfassen von Fensterscheiben für Kraftfahrzeuge oder Gebäude dienende, aus einem vulkanisierten bzw. vernetzten Elastomer bestehende Profilleiste mit einer eine stoffschlüssige Verbindung mit den Scheibenrändern herstellenden Haftmittelauflage, dadurch gekennzeichnet, dass die aus einem vulkanisierten bzw. vernetzten Elastomer bestehende Profilleiste (1) mit einer Haftmittelauflage (2) aus einem unvulkanisierten, vulkanisierbaren Elastomer versehen ist.

2. Profilleiste nach Anspruch 1, dadurch gekennzeichnet, dass die Haftmittelauflage (2) aus einer Naturkautschuk enthaltenden Elastomermischung besteht.

3. Profilleiste nach den Ansprüchen 1 und 2, dadurch gekennzeichnet, dass die Haftmittelauflage (2) ein unter der Einwirkung der Vulkanisationswärme Gas abspaltendes Treibmittel enthält.

4. Profilleiste nach den Ansprüchen 1 bis 3, dadurch gekennzeichnet, dass die Haftmittelauflage (2) mit einer abziehbaren Schutzabdeckung z.B. aus einer Folie eines thermoplastischen Kunststoffes versehen ist.

5. Verfahren zum Herstellen einer Profilleiste nach den Ansprüchen 1 bis 4, dadurch gekennzeichnet, dass die aus einer Strangpresse ausgepresste Profilleiste vulkanisiert bzw. vernetzt und anschliessend oder nach Zwischenlagerung mit einer Haftmittelauflage von im Vergleich zum Leistenquerschnitt wesentlich geringerer Schichtstärke versehen wird.

6. Verfahren nach Anspruch 5, dadurch gekennzeichnet, dass die Haftmittelauflage unter Verwendung einer weiteren Strangpresse aufgebracht wird.

7. Verfahren zum Einfassen einer Fensterscheibe mit einer Profilleiste nach den Ansprüchen 1 bis 4, dadurch gekennzeichnet, dass die Profilleiste in Gebrauchslage auf die Scheibenränder aufgebracht und anschliessend die Haftmittelauflage unter Herstellung einer stoffschlüssigen Verbindung sowohl mit der Profilleiste als auch mit der Scheibe vulkanisiert wird.

8. Verfahren nach Anspruch 7, unter Verwendung einer durch Schmelzen einer Zwischenfolie hergestellten Verbundglasscheibe, dadurch gekennzeichnet, dass die Haftmittelauflage gleichzeitig mit dem Schmelzen der Zwischenfolie vulkanisiert wird.

### Claims

1. Profile strip being utilised for sealingly enclosing window panes for motor vehicles or buildings and being formed from a vulkanised or cross-linked elastomer, the strip being provided with an adhesive overlay which produces a material join with the pane edges, characterised in that the profile strip (1), which is formed from a vulkanised or cross-linked elastomer, is provided with an adhesive overlay (2) formed from a non-vulcanised, vulcanisable elastomer.

2. Profile strip according to claim 1, characterised in that the adhesive overlay (2) is formed from an elastomer mixture containing natural rubber.

3. Profile strip according to claims 1 and 2, characterised in that the adhesive overlay (2) contains a propellant which releases gas upon application of the vulcanisation heat.

4. Profile strip according to claims 1 to 3, characterised in that the adhesive overlay (2) is provided with a detachable protective cover formed, for example, from a film of thermoplastic material.

5. Method of producing a profile strip according to claims 1 to 4, characterised in that the profile strip, which has been extruded from an extrusion press, is vulcanised or cross-linked and is provided subsequently, or after interposition, whith an adhesive overlay having a layer thickness which is substantially less than the cross-section of the strip.

6. Method according to claim 5, characterised in that the adhesive overlay is applied utilising an additional extrusion press.

7. Method of enclosing a window pane with a profile strip according to claims 1 to 4, characterised in that the profile strip is applied to the pane edges in the position of use, and the adhesive overlay is subsequently vulcanised, thereby producing a join between the materials both of the profile strip and of the pane.

8. Method according to claim 7, utilising a composite glass pane which has been produced by the fusion of an intermediate film, characterised in that the adhesive overlay is vulcanised simultaneously with the fusion of the intermediate film.

### Revendications

1. Moulures profilées servant à l'encadrement étanche de glaces de fenêtres pour véhicules automobiles ou pour bâtiments se composant d'une matière élastomère vulcanisée ou réticulée et comportant une couche d'adhésif établissant une liaison par conjugaison de matières avec les bords de glace, caractérisées en ce que la moulure profilée (1), se composant d'une matière élastomère vulcanisée ou réticulée est pourvue d'une couche d'adhérence (2) formée d'une matière élastomère non vulcanisée et vulcanisable.

2. Moulure profilée selon la revendication 1, caractérisée en ce que la couche d'adhérence (2) se compose d'un mélange élastomère contenant du caoutchouc naturel.

3. Moulure profilée selon l'une des revendications 1 et 2, caractérisée en ce que la couche d'adhérence (2) contient un agent de gonflement dégageant du gaz sous l'action de la chaleur de vulcanisation.

4. Moulure profilée selon les revendications 1 à 3, caractérisée en ce que la couche d'adhérence (2) est pourvue d'un revêtement protecteur retirable, constitué par exemple d'une feuille d'une matière thermoplastique.

5. Procédé de fabrication d'une moulure profilée selon les revendications 1 à 4, caractérisé en ce que la moulure profilée par extrusion à la presse est vulcanisée ou réticulée et est pourvue ensuite ou après un stockage intermédiaire, d'une couche d'adhérence ayant une épaisseur bien plus faible que la section de moulure.

6. Procédé selon la revendication 5, caractérisé en ce que la couche d'adhérence est mise en place en utilisant une autre presse à extruder.

7. Procédé d'encadrement d'une glace de fenêtre avec une moulure profilée selon les revendications 1 à 4, caractérisé en ce que la moulure profilée est mise en place dans la position d'utilisation sur les bords de la glace et ensuite la couche d'adhérence est vulcanisée en établissant une liaison par conjugaison de matières, d'une part avec la moulure profilée et, d'autre part, avec la glace.

8. Procédé selon la revendicatio 7, avec utilisation d'une glace en verre composite fabriquée par fusion d'une feuille intermédiaire, caractérisé en ce que la couche d'adhérence est vulcanisée en même temps que la fusion de la feuille intermédiaire.